# EUROPEAN PATENT SPECIFICATION

(11) **EP 2 343 184 B1**
(45) Date of publication and mention of the grant of the patent: **25.12.2013**
(21) Application number: 11150378.5
(22) Date of filing: 07.01.2011
(51) Int. Cl.: B32B 7/06, B32B 7/12, B32B 27/08, B32B 27/32, B32B 27/36, C09J 7/02, C09J 175/16, G02B 5/30, G02F 1/1335, G02F 1/13363, G09F 9/00

(54) **Multi-layer film**
Mehrschichtige Folie
Film multicouche

(30) Priority: 07.01.2010 JP 2010015990; 27.07.2010 JP 2010168330; 15.11.2010 JP 2010254917
(43) Date of publication of application: 13.07.2011
(60) Divisional application: 13193538.9
(73) Proprietor: Power Support Co., Ltd., Tokyo 150-0013 (JP)
(72) Inventor: Mase, Ryoichi, Tokyo 150-0013 (JP)
(74) Representative: Müller Schupfner & Partner

(56) References cited:
- EP-A1- 2 080 640
- WO-A1-2009/006681
- JP-A- 2007 156 066
- US-A1- 2004 246 386
- US-A1- 2007 212 509
- US-A1- 2009 186 181
- US-A1- 2009 246 427

## Description

### FIELD OF INVENTION

The present invention relates to a multilayer film designed to be attached on a display of electronic devices, such as mobile phones, televisions, and computers. More particularly, the present invention relates to a multilayer film showing a sufficient scratch resistant property, having a separator that can easily be cut nearly straight and accurately leaving almost no residual cutting dust on an adhesive layer of the multilayer film, and providing an option to include an additional cleaning function.

### BACKGROUND OF THE INVENTION

Recently, multilayer films are have been used, for many different purposes, on variety screens of electronics products such as displays of mobile phones and television. The multilayer sheets can be various types, and for example, a polarizing sheet, a phase difference sheet, an optical compensation sheet, and a brightness enhancement sheet. Generally, multilayer clear film sheets are used except for colored film sheets which are used for special purposes such as a privacy protection purpose.

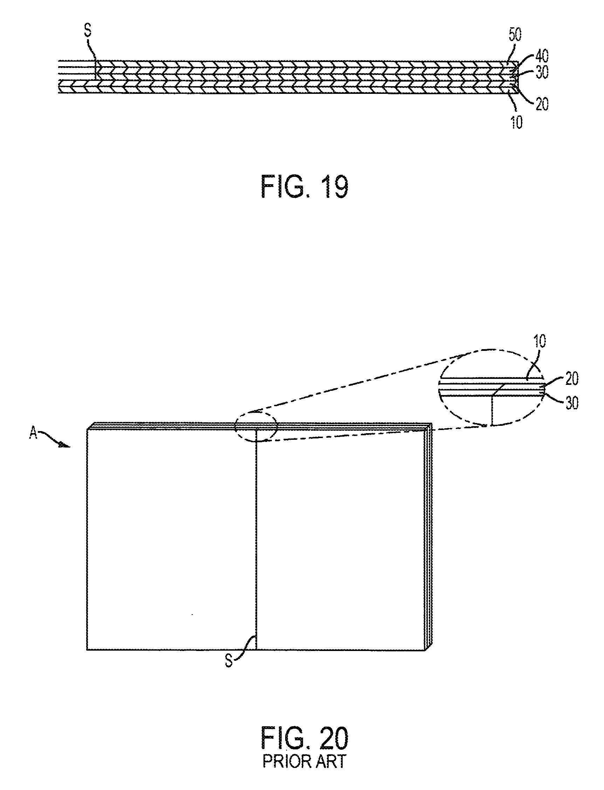

Conventional multilayer film A in FIGS. 20-21 has a material base sheet 10 with a front surface, not shown in the figures, to be exposed after installation of the sheet 10 on a display and a back surface to be coated by an adhesive material directly facing the display when installed, an adhesive layer 20 formed by applying such as an adhesive agent to be layered on an entire surface of the back surface, and a separator 30 temporarily covering the adhesive layer 20 prior to the installation of the multilayer film A on the display, as described in Japanese unexamined Patent Publication No. 2007-156066.

The conventional multilayer film A has a problem of positioning the same on the display because the user needs to guess an appropriate positioning after removing the separator or as gradually removing the separator. Also, placing the film on an appropriate position without leaving any bubble takes an experience.

To solve the identified problems associated with the conventional film, another type of separator has been developed where a separator 30 has a slit S across the film (back split slit) which enables users to position one half of the film A after removing one half of the separator 30 from the slit S. An adhesive layer 20 exposed after removing the half of the separator 30 is placed on one half of the display, and the other half of the film A with the separator 30 is lifted to remove the other half of the separator 30 finally placing the other half of the film A on an appropriate position of the display. FIG. 20 shows this conventional film structure where the multilayer film A has the separator 30 with a slit crossing a middle portion the separator 30.
However, this half-slit separator has a problem of generating cutting dust ultimately leaving the dust on the adhesive layer 20, and the amount of the dust and possibility of generating the dust increase as the half-slit line becomes longer.

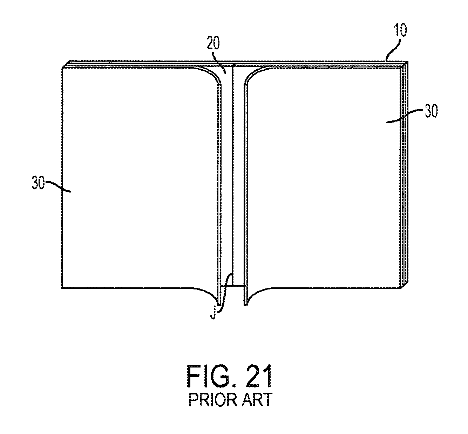

In addition, during the slitting process, a blade may accidentally extend into the adhesive layer 20 which create a chance of keeping air in a slit gap in the adhesive layer 20 and also a chance of leaving a white line J as shown in FIG. 21.

Furthermore, during the slitting process, the blade may accidentally cut deeper causing a damage to the material base sheet 10. In an extreme situation, the blade extends further to slightly cut the entire cross line of the film A leaving a significant damage to the film A.

US-2004/246386 A1 relates to a screen protection shield assembly comprising of a transparent overlay sheet having a first and a second side, a removable backing sheet and an adhesive layer, which is applied to the first side of the transparent overlay sheet.
JP 2007156066 A relates to an optical functional film with an adhesive composition layer, which is obtained by stacking an adhesive composition layer formed by curing a composition on one surface of an optical functional film.
US-2009/186181 A1 relates to a multilayered protective film set having a first film layer, a second film layer, a first adhesive layer position between said first and second film layers, a third film layer and a second adhesive layer position between the second and third film layers.

### SUMMARY OF INVENTION

This invention was made to eliminate the above-identified problems. Therefore, an object of this invention is to provide a multilayer film showing a sufficient scratch resistant property, having a material base sheet, an adhesive layer applied on a back surface of the material base sheet, and a separator temporarily placed and adhered on the adhesive layer, where the separator has strong tear directionality allowing the user to tear the separator to expose the predetermined adhesive layer providing an accurate positioning on the display to facilitate an film installation process. It is another object of this invention to enable the user to tear the predetermined portion of the film almost straight without risk of the bubble and white line problems.

The multi-layer film of this invention comprises a material base sheet, an adhesive layer formed on one side of the material base sheet, and a separator temporarily fixed on the adhesive layer, and the separator has strong tear directionality, wherein the separator has a slit and is formed as a mano-axial stretching film sheet, and wherein the slit is made in the drawing direction of the film so as to facilitate the tearing step. The multi-layer film can have additional adhesive layer formed on the separator temporarily fixed on the first adhesive layer and additional separator temporarily fixed on the second adhesive layer.

The material base sheet of the multi-layer film can have an effective area to be placed on an object and a disposable area, and at least one slit is formed on any one or all of the separators and material base sheet.

A slit line can be formed at a boundary between said effective area and the disposable area.

The separator can be larger than the material base sheet, and at least one slit can be formed on the separator.

The multilayer film of this invention has the separator with strong tear directionality and a slit in the tear direction, allowing the user to cut nearly straight to facilitate the positioning and installation process of the film on the display. During the manufacturing and forming process of the slit on the film, slitting all the way crossing the separator as in the conventional art using the blade is not necessary, which eliminates a chance of damaging the film sheet by the blade extending into undesirable area of the adhesive layer or the material base sheet.

Such extensive cutting would go into the adhesive layer which causes a chance of leaving bubbles in a cutting gap or leaving the white line which can be eliminated hereby. No noticeable cutting dust can be created, and therefore a chance of leaving the cutting dust on the adhesive layer is very slim.

The material base sheet can be designed smaller than the separator, and at least one slit can be formed on a portion of the separator not superposing the material base sheet, thereby removing the above-identified problems with the knife and cutting.

Alternatively, the material base sheet has an effective area which is actually used as a film and a disposable area which can be disposed after installation of the film on the display. In this case, the slit can be made in the disposable area and the cut can extend to the material base sheet, which makes the blade slitting process much easier.

### BRIEF DESCRIPTION OF THE DRAWINGS

FIG. 1 is a perspective view of the first embodiment of the multilayer film according to this invention;

FIG. 2 is a cross section view of the multilayer film according to the first embodiment taken along the line Y-Y;

FIG. 3 is a perspective view of the first embodiment of the multilayer film according to this invention illustrating the process of tearing the left half of the separator;

FIG. 4 is a perspective view of the first embodiment of the multilayer film according to this invention illustrating the condition after removing the left half of the separator;

FIG. 5 is a perspective view of the first embodiment of the multilayer film according to this invention illustrating the process of tearing the right half of the separator;

FIG. 6 is a perspective view of the first embodiment of the multilayer film according to this invention illustrating the condition after removing the right half of the separator;

FIG. 7 is a perspective view of the second embodiment of the multilayer film according to this invention;

FIG. 8 is a cross section view of the multilayer film according to the second embodiment taken along the line Y-Y;

FIG. 9 is a perspective view of the third embodiment of the multilayer film according to this invention;

FIG. 10 is a cross section view of the multilayer film according to the third embodiment taken along the line Y-Y;

FIG. 11 is a perspective view of the fourth embodiment of the multilayer film according to this invention;

FIG. 12 is a cross section view of the multilayer film according to the fourth embodiment taken along the line Y-Y;

FIG. 13 is a perspective view of the fifth embodiment of the multilayer film according to this invention;

FIG. 14 is a cross section view of the multilayer film according to the fifth embodiment taken along the line Y-Y;

FIG. 15 is a cross section view of the multilayer film according to the fifth embodiment taken along the line X-X;

FIG. 16 is a perspective view of the sixth embodiment of the multilayer film according to this invention;

FIG. 17 is a cross section view of the multilayer film according to the sixth embodiment taken along the line Y-Y;

FIG. 18 is a perspective view of the seventh embodiment of the multilayer film according to this invention;

FIG. 19 is a cross section view of the multilayer film according to the seventh embodiment taken along the line Y-Y;;

FIG. 20 is a perspective view of the conventional multilayer film;

FIG. 21 is a view illustrating the process of separating the conventional separator of FIG. 20;

FIG. 22 is a perspective view of the eighth embodiment of the multilayer film according to this invention;

FIG. 23 is a cross section view of the multilayer film according to the eighth embodiment taken along the line Y-Y;

FIG. 24 is a perspective view of the ninth embodiment of the multilayer film according to this invention;

FIG. 25 is a cross section view of the multilayer film according to the ninth embodiment taken along the line Y-Y;

FIG. 26 is a cross section view of the multilayer film according to the tenth embodiment taken along the line Y-Y; and

FIG. 27 is a cross section view of the multilayer film according to the eleventh embodiment taken along the line Y-Y.

### PREFERRED EMBODIMENT OF THIS INVENTION

Embodiments of this invention will be explained next with accompanied drawings.

The following embodiments are merely examples of this invention, and therefore this invention is not limited to the descriptions below.

### First Embodiment

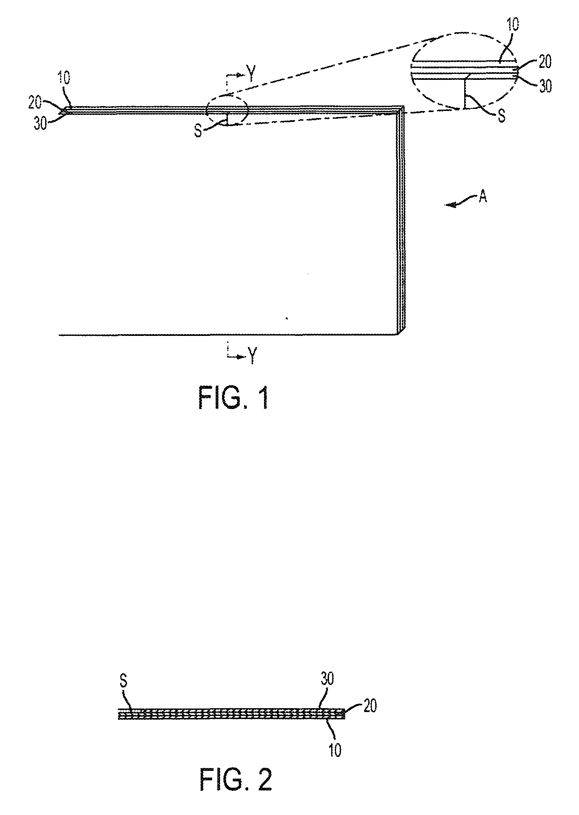

FIG. 1 is a perspective view of the multilayer film A according to the first embodiment of this invention, and FIG. 2 is a cross section view of the multilayer film A of the first embodiment taken along the line Y-Y;

The multilayer film A according to this embodiment is a rectangular film having a material base sheet 10, an adhesive layer 20, and a separator 30.

This multilayer film is structured so that a front surface of the material base sheet 10 is exposed to the user, the adhesive layer 20 is created on a back surface of the material base sheet 10, and the separator 30 is temporarily placed and attached to the adhesive layer 20.

The material base sheet 10 for example can be a reflection sheet, a polarizing sheet, decoration sheet, a semi-transparent sheet, a phase difference sheet, a brightness enhancement sheet, a protective sheet, an anti-reflective sheet, an electromagnetic wave shield sheet, an optical compensation sheet, a near-infrared ray filter sheet, and a color matching sheet.

The separator 30 can be synthetic resin such as polyethylene, polypropylene, polyethylene terephthalate. The separator 30 of this invention preferably has a strong tear directionality, and for example, a monaxial stretching or one-way drawing sheet may be used as the separator 30. The separator 30 is stretched in one direction for facilitating the tearing by the user. In this embodiment, the slit S is made in the drawing direction of the film so as to facilitate the tearing step. Preferably, the separator 30 is transparent and is treated with silicone, long-chain alkyl, and fluorine in order to smoothly detach and remove from the adhesive layer 20. Thickness of the separator 30 is not limited to a particular size; however, generally the thickness between 20µm and 200µm is a popular thickness.

A material for the adhesive layer 20 is not particularly limited; however, the adhesive agent such as acrylic adhesive agent, rubber adhesive agent, and silicone may be used here. In consideration of the cost, transparency, and durability, especially acrylic polymer is preferable. Thickness of the adhesive layer 2 is not limited to a particular size; however, generally the thickness between 10µm and 100µm is popularly used.

In this embodiment, a short slit S is located at an intermediate portion of the multilayer film A, and the slit S is only formed on the separator 30. The slit S is a cut in the tearing direction of the separator 30 along the invisible drawing line of the separator 30.

The slit S can be made for example by Timpson Press Blade; however, because of the quality of the finished end surface, a laser cutter is preferable.

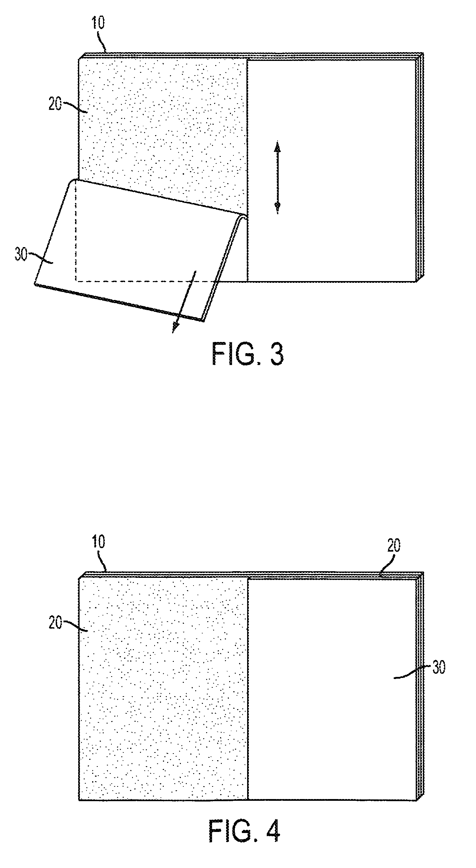

FIG. 3 is a perspective view of the multilayer film according to the first embodiment in the process of tearing the left half of the separator 30, and FIG. 4 illustrates the condition of the film after removing the left half of the separator 30.

Here, the installment process of the multilayer film on the electronic device display will be explained with reference to the drawings. The user picks a left side edge of the slit S on the separator 30 and starts to tear straight down as shown in FIG. 3. The left half of the separator 30 is torn from the slit S in the direction of orientation or along the vertical allow in FIG. 3. Because of the characteristics of the separator 30 being one-way drawing sheet, tearing the left half of the separator 30 is easy.

It is preferable to tear the left half of the separator 30 nearly straight, and at least when the tearing starts at the slit S in the vertical direction, the tearing line should be straight enough to end at the opposite side thereof without existing at the right side line of the separator 30.

The separator 30 is positioned and adhered on the adhesive layer 20 which is layered on a back surface of the material base sheet 10, and therefore when the left half of the separator 30 is being torn from the slit S, the right half of the separator 30 is still adhered to the adhesive layer 20, which makes it easier to tear the left half of the separator 30.

After removing the left half of the separator 30, the left half of the adhesive layer 20 is exposed as shown in FIG. 4. Then, the left half of the adhesive layer 20 is placed on the display.

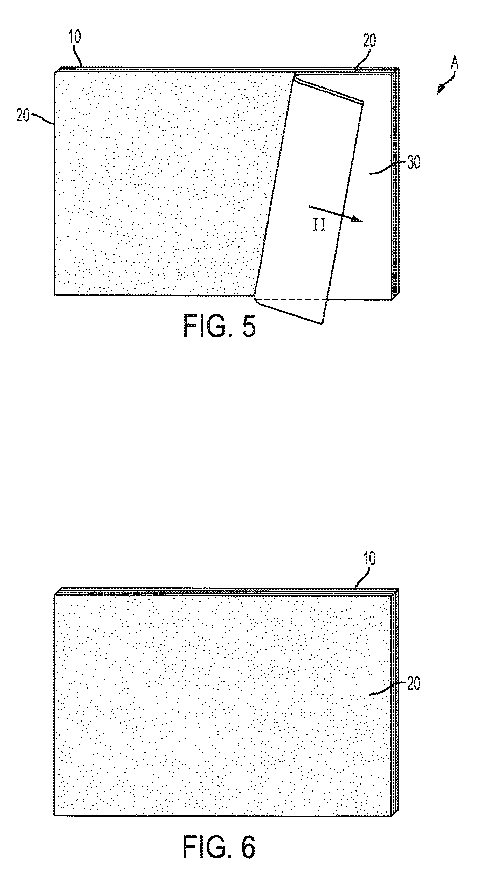

The process of installing the right half of the multilayer film is illustrated in FIG. 5. While the left half of the adhesive layer 20 is positioned and adhered to the display, the right half of separator 30 is removed from the remaining edge of the slit S.

The right half of the adhesive layer 20 can gradually be placed on the display as removing the right half of the separator 30, thereby completing the installation of the multilayer film.

Accordingly, positioning and aligning the film on the display is extremely easy.

The slit S can be very short, and therefore the blade does not need to go further down to significantly damage the material base sheet 10 during the slitting process at the film manufacturing site.

The cutting dust generally generated while tearing the separator 30 can hardly be seen in this invention because of the one-way drawing separator 30, thereby leaving no cutting dust adversely affecting the appearance of the film after installation.

The slit S can be short because the separator 30 can easily be torn straight along the drawing line of one-way drawing sheet.

### Second Embodiment

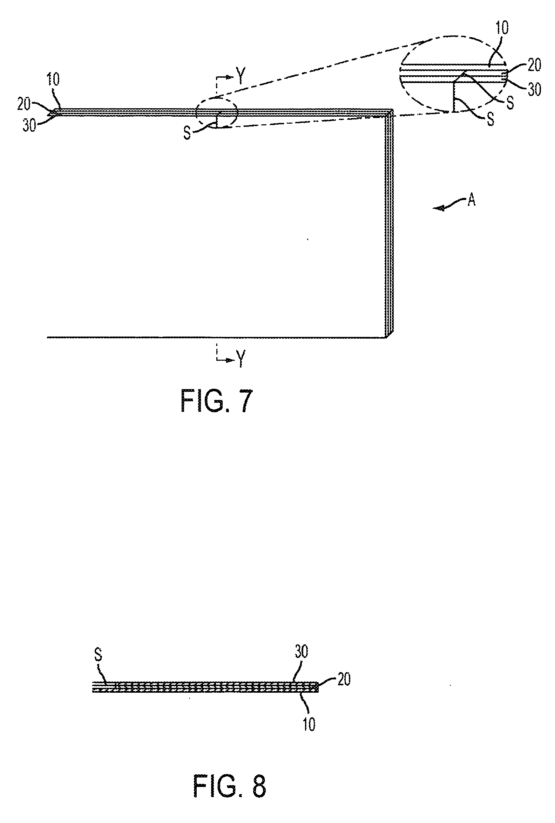

FIG. 7 is a perspective view of the multilayer film A according to the second embodiment of this invention, and FIG. 8 is a cross section view of the multilayer film A of the second embodiment taken along the line Y-Y;

The multilayer film A of the second embodiment has the slit S in an intermediate portion of the separator 30 as the first embodiment but the slit S is deeper than the slit S in the first embodiment to go into the adhesive layer 20. Although the slit S is short and should stop at the adhesive layer 20, the quality of the film A after completion of the installation would not be affected even if the blade accidentally goes into the material base sheet 10. The installation process is same as the first embodiment and the explanation of which will be omitted here.

### Third Embodiment

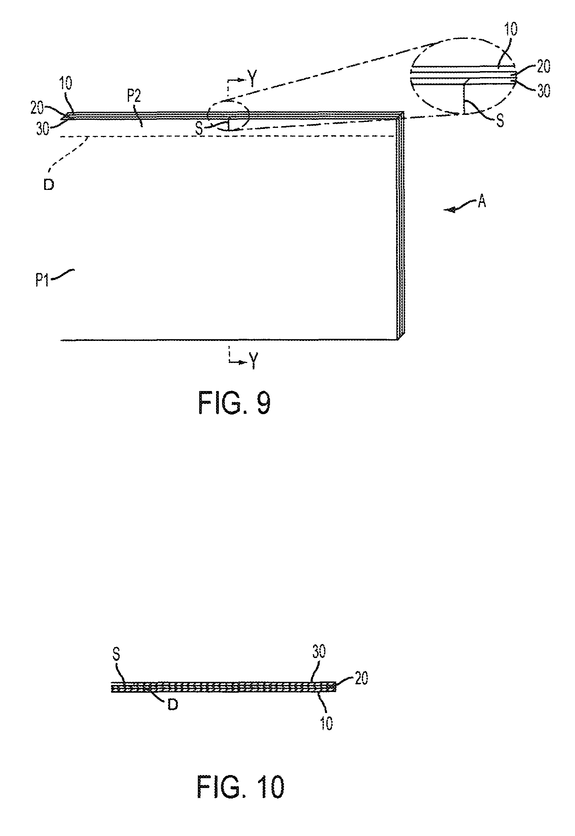

FIG. 9 is a perspective view of the multilayer film A according to the third embodiment of this invention, and FIG. 10 is a cross section view of the multilayer film A of the third embodiment taken along the line Y-Y. The multilayer film A of the third embodiment has an effective area P1 which is installed on the display and a disposable area P2 which can be disposed after installing the film on the display. The effective area P1 becomes a film to be placed on the display and the disposable area P2 is disposed after tearing and separating from the effective area P1. A detach line D is formed on the material base sheet 10 and the adhesive layer 20 between the effective area P1 and the adjacent disposable area P2. The disposable area P2 can be in any shape but in this embodiment the disposable area P2 has the same width along the detach line D.

The slit S in this embodiment is positioned a central portion of the multilayer film A within the disposable area P2, and therefore slitting deeply into the material base sheet 10 has no adverse effect to the pre-installed film.

The blade can cut through the material base sheet 10, adhesive layer 20, and separator 30 as long as the slit S does not extend beyond the disposable area P2, and no sensitive half cut process without reaching the material base sheet 10 is not necessary.

A process of installing the film A is same as the description in the first embodiment; however, the disposable area P2 is preferably removed from the detach line D prior to the installment.

### Fourth Embodiment

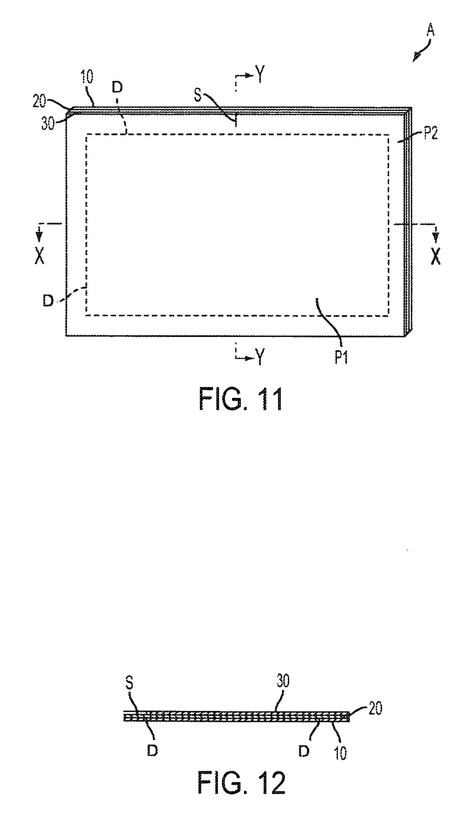

FIG. 11 is a perspective view of the multilayer film A according to the fourth embodiment of this invention, and FIG. 12 is a cross section view of the multilayer film A of the fourth embodiment taken along the line Y-Y. The multilayer film A according to the fourth embodiment has the effective area P1 in the middle of the disposable area P2, where the effective area P1 is surrounded by the disposable area P2. The only difference in this embodiment from the third embodiment is that the detach line D is formed on the material base sheet 10 and the adhesive layer 20 between the effective area P1 and the adjacent disposable area P2, and the explanation of the identical members and installation process will be omitted.

### Fifth Embodiment

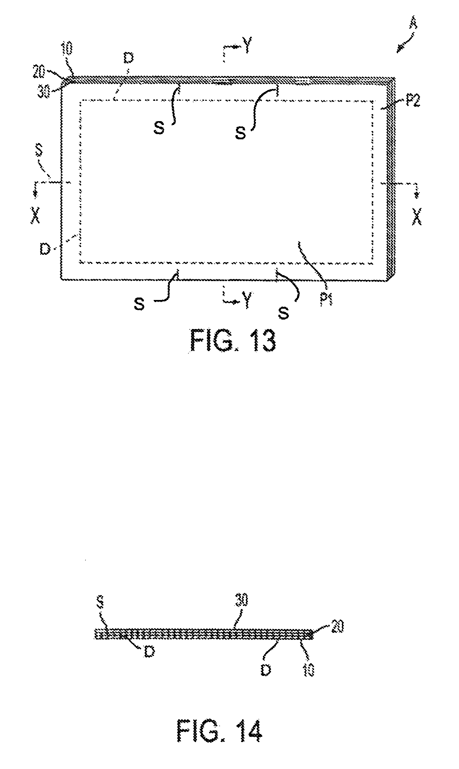

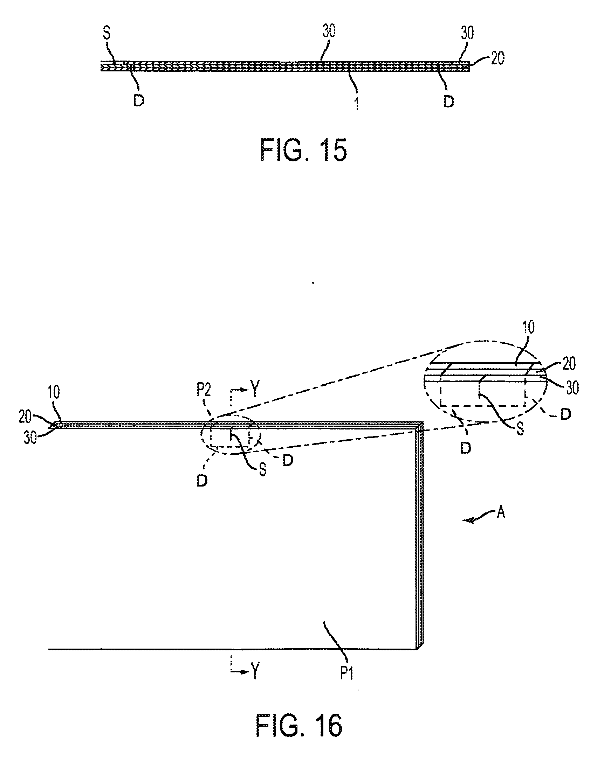

FIG. 13 is a perspective view of the fifth embodiment of the multilayer film according to this invention. FIG. 14 is a cross section view of the multilayer film according to the fifth embodiment taken along the line Y-Y; and FIG. 15 is a cross section view taken along the line X-X. The multilayer film A according to the fifth embodiment is same as the fourth embodiment except that multiple slits are provided in the disposable area P2, and therefore the explanation of the identical members and installing process will be omitted. Here, two slits S are provided on each horizontal parallel line and one slit S is provided on each vertical parallel line of the multilayer film A as shown in FIG. 13. The user can decide to tear from any slit S depending upon the user's convenience and the type of device. For example, the user can tear two middle slits S, S to remove the middle portion of the separator 30, thereby exposing only the middle part of the adhesive layer 20. Then, the adhesive layer 20 can be placed on the display. Both sides of the separator 30 remain, which can be removed thereafter to complete the installment.

### Sixth Embodiment

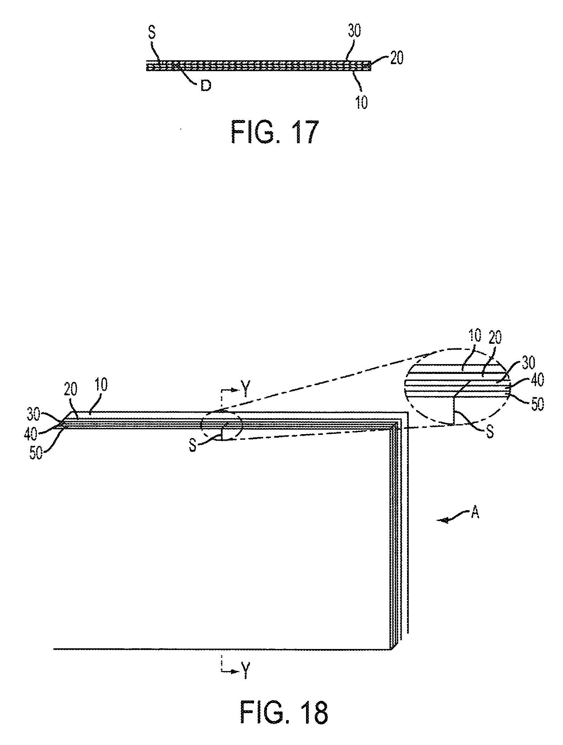

FIG. 16 is a perspective view of the multilayer film A according to the sixth embodiment of this invention, and FIG. 17 is a cross section view of the multilayer film A of the sixth embodiment taken along the line Y-Y;
The multilayer film A of the sixth embodiment also has an effective area P1 which is installed on the display and a disposable area P2 which can be disposed after installing the film on the display, and the explanation of the identical members and the process would be omitted. The only difference here is the area of the disposable area P2 is very small as shown in FIG. 16, thereby maximizing the yield rate of the material.

### Seventh Embodiment

FIG. 18 is a perspective view of the multilayer film A according to the seventh embodiment of this invention, and FIG. 19 is a cross section view of the multilayer film A of the seventh embodiment taken along the line Y-Y. The multilayer film A according to this embodiment has the material base sheet 10, the adhesive layer 20, separator 30, a second adhesive layer 40 which is applied on the separator 30, and a second separator 50 temporarily placed on the second adhesive layer 40. The slit S in this embodiment is formed in an intermediate portion on the top horizontal line of the second separator 50 in FIG. 18. The slit S needs to reach the separator 30 preferably without reaching the material base sheet 10.

In order to install the multilayer film A of this embodiment, the left half of the second separator 50 is removed first. Here, the left half of the second separator 50 is torn from the slit S in the direction of orientation or along the vertical line in FIG. 18. Because of the characteristics of the second separator 50 being one-way drawing sheet, tearing the left half of the second separator 50 is easy.

The second separator 50 is positioned and adhered on the second adhesive layer 40, and therefore when the left half of the second separator 50 is being torn from the slit S, the right half of the second separator 50 is still adhered to the second adhesive layer 40, which makes it easier to tear the left half of the second separator 50.

According the left half of the second separator 50 is removed to expose the second adhesive layer 40, which is placed on the display. The right half of the second separator 50 is removed to place the exposed right half of the second adhesive layer 40 on the display. Then, the left half portion of the film A is lifted to detach from the display, and the left half of the separator 30 is torn from the slit S to expose the left half of the adhesive layer 20 to be placed on the left half of the display. The right half of the separator 30 is removed in the same manner and the adhesive layer 20 is placed on the display to complete the installation. A significant advantage of this embodiment is to provide the cleaning function to the film A, because any remaining dust or particles on the display would be removed by the second adhesive layer 40 temporarily placed on and removed from the display. Eighth Embodiment

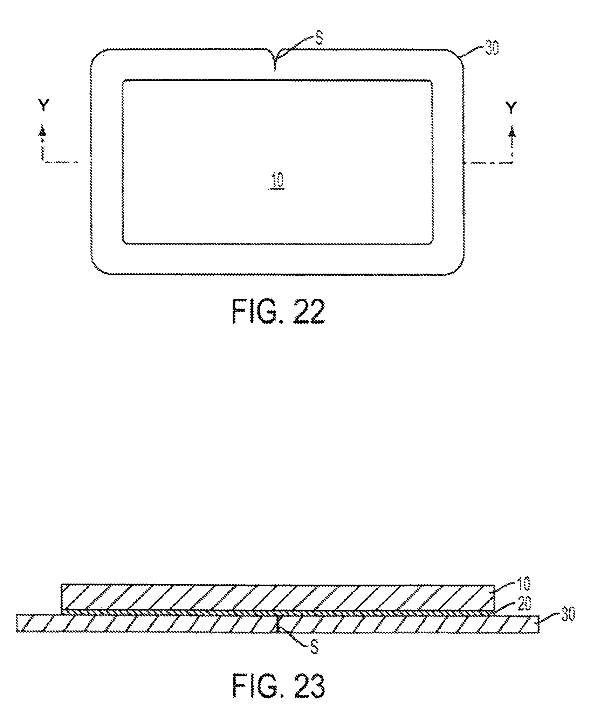

FIG. 22 is a perspective view of the multilayer film A according to the eighth embodiment of this invention, and FIG. 23 is a cross section view of the multilayer film A of the eighth embodiment taken along the line Y-Y. In this embodiment, the separator 30 is designed to be larger than the material base sheet 10, and two slits S are formed on the top horizontal line of the separator 30 as shown in FIG. 22. In this embodiment, either left or right half of the separator 30 is removed and the exposed adhesive layer 20 is placed on the display, and then the remaining half separator 30 is removed to place the exposed adhesive layer 20 on the display.

### Ninth Embodiment

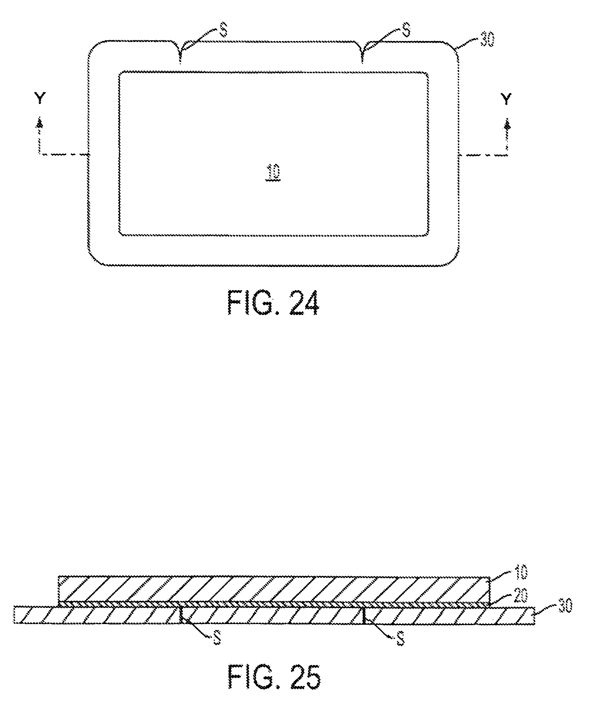

FIG. 24 is a perspective view of the ninth embodiment of the multilayer film according to this invention; and FIG. 25 is a cross section view of FIG. 24 taken along the line Y-Y. In this embodiment, the separator 30 is larger than the material base sheet 10, thereby leaving an unlayered section on the separator 30 as shown in FIG. 24. In this embodiment, there are two slits S vertically formed at an upper end line of the unlayered portion of the separator 30. The user may pick the middle portion between two slits S to tear almost straight down to cut the middle portion of the separator 30 exposing the adhesive layer 20 to be placed on the display. Both sides of the remaining separator 30 are removed in turn to complete the installment. Also, the user can decide which portion of the separator 30 to be removed first depending upon the user's convenience, and therefore the left or right side of the separator 30 can be removed first. Also, the number of slits S can be selected according to the needs.

### Tenth Embodiment

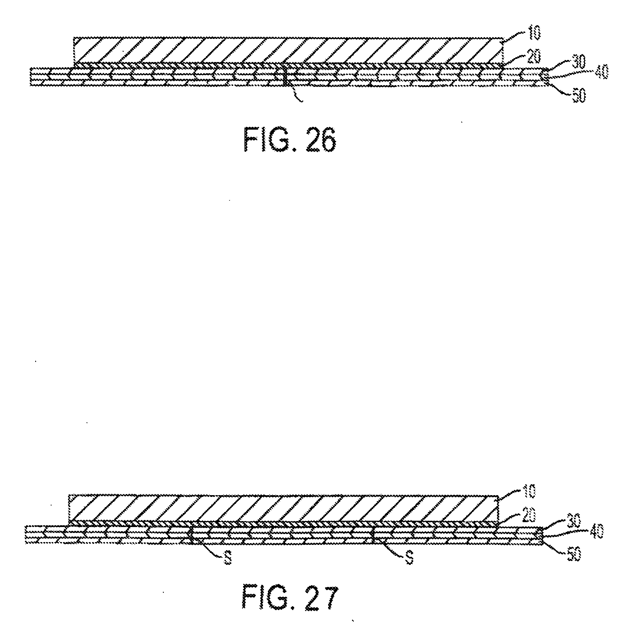

FIG. 26 is a sectional view of the tenth embodiment of the multilayer film according to this invention. The multilayer film A of this embodiment has the material base sheet 10, the adhesive layer 20 layered on the material base sheet 10, the separator 30 on the adhesive layer 20, the second adhesive layer 40 on the separator 30, and the second separator 50 on the second adhesive layer 40. The separator 30 of this embodiment is larger than the material base sheet 10, and the exposed portion of the separators 30, 50 out from the material base sheet 10 has a slit S formed in the same manner as in the ninth embodiment. The installation process of the film A is similar to the above-embodiments especially the seventh embodiment, and the explanation of which is omitted.

### Eleventh Embodiment

FIG. 27 is a cross section view of the eleventh embodiment of the multilayer film according to this invention. This embodiment is identical to the tenth embodiment except that there are two slits S, S rather than one slit S in the tenth embodiment. The installation process of this embodiment is similar to the ninth and tenth embodiments, and the explanation of which is omitted here.
This invention was described and explained as above; however, embodiments of this invention are not limited to the above-embodiments, and many modifications and arrangements are possible

For example, the disposable area P2 can be in any shape and not limited to the above-examples. Slits can be formed in a various way such as by perforating and cutting in V-shape. The detach line D can be perforated. Also, for example, the film A in the seventh embodiments can be applied to preceding embodiments. The adhesive layer can be formed by many different materials such as a viscoelastic material and adhesive material. Furthermore, the shape of the film A is not limited to rectangular and can be any shape to confirm with the display. Furthermore, any guide mean can be provided in the separator 30 to facilitate to place the film A on an appropriate place. In addition, the first and second separators 30, 50 or any alternative separators can be used to accomplish the cleaning function only.

## Claims

1. A multi-layer film comprising a material base sheet (10), an adhesive layer (20) formed on one side of the material base sheet (10), and a separator (30) temporarily fixed on the adhesive layer (20),**characterized in that** said separator (30) having a strong tear directionality has a slit (S) and is formed as a mono-axial stretching film sheet, wherein the slit (S) is made in the drawing direction of the film so as to facilitate the tearing step.

2. The multi-layer film of Claim 1, further comprising a second adhesive layer formed on the separator temporarily fixed on the first adhesive layer and a second separator temporarily fixed on the second adhesive layer.

3. The multi-layer film of Claim 1, **characterized in that** the separator has at least one slit in a direction to be torn.

4. The multi-layer film of Claim 2, **characterized in that** at least one of the first and second separators has at least one slit in a direction to be torn.

5. The multi-layer film of Claim 1, **characterized in that** the material base sheet has an effective area to be placed on an object and a disposable area.

6. The multi-layer film of Claim 2, **characterized in that** the material base sheet has an effective area to be placed on an object and a disposable area.

7. The multi-layer film of Claim 5, **characterized in that** at least one slit is formed on said disposable area.

8. The multi-layer film of Claim 6, **characterized in that** at least one slit is formed on said disposable area.

9. The multi-layer film of Claim 1, **characterized in that** at least one slit is formed on the separator.

10. The multi-layer film of Claim 2, **characterized in that** at least one slit is formed on at least one of first and second separators.

11. The multi-layer film of Claim 1, **characterized in that** at least one slit is formed on the adhesive layer and the separator.

12. The multi-layer film of Claim 2, **characterized in that** at least one slit is formed on the adhesive layer and at least one of first and second separators.

13. The multi-layer film of Claim 1, **characterized in that** at least one slit is formed on the material base sheet, the adhesive layer, and the separator.

14. The multi-layer film of Claim 2, **characterized in that** at least one slit is formed on the material base sheet, the adhesive layer, and at least one of first and second separators.

15. The multi-layer film of Claim 5, **characterized in that** a detach line is formed at a boundary between said effective area and said disposable area.

16. The multi-layer film of Claim 6, **characterized in that** a detach line is formed at a boundary between said effective area and said disposable area.

17. The multi-layer film of Claim 1, **characterized in that** the separator is larger than the material base sheet.

18. The multi-layer film of Claim 2, **characterized in that** separator is larger than the material base sheet

19. The multi-layer film of Claim 17, **characterized in that** at least a portion of a slit is formed on a portion of the separator without superposing the material base sheet.

20. The multi-layer film of Claim 18, **characterized in that** at least a portion of a slit is formed on a portion of at least one of the separators without superposing the material base sheet.

## Patentansprüche

1. Mehrschichtige Folie, umfassend ein Materialbasisblatt (10), eine Klebschicht (20), welche an einer Seite des Materialbasisblatts (10) gebildet ist, sowie einen Separator (30), welcher zeitweise an der Klebschicht (20) festgelegt ist, **dadurch gekennzeichnet, dass** der Separator (30), welcher eine starke Reißrichtungsabhängigkeit aufweist, einen Schlitz (S) aufweist und als ein monoaxial gerecktes Folienblatt gebildet ist, wobei der Schlitz (S) in der Zugrichtung der Folie derart herbeigeführt ist, dass der Reißschritt erleichtert wird.

2. Mehrschichtige Folie nach Anspruch 1, weiter umfassend eine zweite Klebschicht, welche an dem Separator gebildet ist, welcher zeitweise an der ersten Klebschicht festgelegt ist, sowie einen zweiten Separator, welcher zeitweise an der zweiten Klebschicht festgelegt ist.

3. Mehrschichtige Folie nach Anspruch 1, **dadurch gekennzeichnet, dass** der Separator wenigstens einen Schlitz in einer zu reißenden Richtung aufweist.

4. Mehrschichtige Folie nach Anspruch 2, **dadurch gekennzeichnet, dass** wenigstens einer des ersten und zweiten Separators wenigstens einen Schlitz in einer zu reißenden Richtung aufweist.

5. Mehrschichtige Folie nach Anspruch 1, **dadurch gekennzeichnet, dass** das Materialbasisblatt einen effektiven bzw. erforderlichen Bereich, welcher auf einem Objekt zu platzieren ist, sowie einen entbehrlichen Bereich aufweist.

6. Mehrschichtige Folie nach Anspruch 2, **dadurch gekennzeichnet, dass** das Materialbasisblatt einen erforderlichen Bereich, welcher auf einem Objekt zu platzieren ist, sowie einen entbehrlichen Bereich aufweist.

7. Mehrschichtige Folie nach Anspruch 5, **dadurch gekennzeichnet, dass** wenigstens ein Schlitz an dem entbehrlichen Bereich gebildet ist.

8. Mehrschichtige Folie nach Anspruch 6, **dadurch gekennzeichnet, dass** wenigstens ein Schlitz an dem entbehrlichen Bereich gebildet ist.

9. Mehrschichtige Folie nach Anspruch 1, **dadurch gekennzeichnet, dass** wenigstens ein Schlitz an dem Separator gebildet ist.

10. Mehrschichtige Folie nach Anspruch 2, **dadurch gekennzeichnet, dass** wenigstens ein Schlitz an wenigstens einem des ersten und zweiten Separators gebildet ist.

11. Mehrschichtige Folie nach Anspruch 1, **dadurch gekennzeichnet, dass** wenigstens ein Schlitz an der Klebschicht und dem Separator gebildet ist.

12. Mehrschichtige Folie nach Anspruch 2, **dadurch gekennzeichnet, dass** wenigstens ein Schlitz an der Klebschicht und wenigstens einem des ersten und zweiten Separators gebildet ist.

13. Mehrschichtige Folie nach Anspruch 1, **dadurch gekennzeichnet, dass** wenigstens ein Schlitz an dem Materialbasisblatt, der Klebschicht sowie dem Separator gebildet ist.

14. Mehrschichtige Folie nach Anspruch 2, **dadurch gekennzeichnet, dass** wenigstens ein Schlitz an dem Materialbasisblatt, der Klebschicht sowie wenigstens einem des ersten und zweiten Separators gebildet ist.

15. Mehrschichtige Folie nach Anspruch 5, **dadurch gekennzeichnet, dass** eine Trennlinie an einer Grenze zwischen dem erforderlichen Bereich und dem entbehrlichen Bereich gebildet ist.

16. Mehrschichtige Folie nach Anspruch 6, **dadurch gekennzeichnet, dass** eine Trennlinie an einer Grenze zwischen dem erforderlichen Bereich und dem entbehrlichen Bereich gebildet ist.

17. Mehrschichtige Folie nach Anspruch 1, **dadurch gekennzeichnet, dass** der Separator größer als das Materialbasisblatt ist.

18. Mehrschichtige Folie nach Anspruch 2, **dadurch gekennzeichnet, dass** der Separator größer als das Materialbasisblatt ist.

19. Mehrschichtige Folie nach Anspruch 17, **dadurch gekennzeichnet, dass** wenigstens ein Teilbereich eines Schlitzes an einem Teilbereich des Separators gebildet ist, ohne das Materialbasisblatt zu überlagern.

20. Mehrschichtige Folie nach Anspruch 18, **dadurch gekennzeichnet, dass** wenigstens ein Teilbereich eines Schlitzes an einem Teilbereich wenigstens eines der Separatoren gebildet ist, ohne das Materialbasisblatt zu überlagern.

## Revendications

1. Film multicouche comprenant une feuille de base matérielle (10), une couche adhésive (20) formée sur un côté de la feuille de base matérielle (10), et un séparateur (30) temporairement fixé sur la couche adhésive (20), **caractérisé en ce que** ledit séparateur (30) ayant une forte directionnalité vis-à-vis de la déchirure comporte une fente (S) et est formé comme une feuille en film à étirage monoaxial, tel que la fente (S) est ménagée dans la direction d'étirage du film de manière à faciliter l'opération de déchirure.

2. Film multicouche selon la revendication 1, comprenant en outre une seconde couche adhésive formée sur le séparateur temporairement fixé sur la première couche adhésive, et un second séparateur temporairement fixé sur la seconde couche adhésive.

3. Film multicouche selon la revendication 1, **caractérisé en ce que** le séparateur comporte au moins une fente dans une direction prévue pour être déchiré.

4. Film multicouche selon la revendication 2, **caractérisé en ce qu'**au moins un séparateur parmi le premier et le second séparateur comporte au moins une fente dans une direction prévue pour être déchiré.

5. Film multicouche selon la revendication 1, **caractérisé en ce que** la feuille de base matérielle possède une aire effective pour être placée sur un objet et une aire à jeter.

6. Film multicouche selon la revendication 2, **caractérisé en ce que** la feuille de base matérielle possède une aire effective pour être placée sur un objet et une aire à jeter.

7. Film multicouche selon la revendication 5, **caractérisé en ce qu'**au moins une fente est formée sur ladite aire à jeter.

8. Film multicouche selon la revendication 6, **caractérisé en ce qu'**au moins une fente est formée sur ladite aire à jeter.

9. Film multicouche selon la revendication 1, **caractérisé en ce qu'**au moins une fente est formée sur le séparateur.

10. Film multicouche selon la revendication 2, **caractérisé en ce qu'**au moins une fente est formée sur au moins un séparateur parmi le premier et le second séparateur.

11. Film multicouche selon la revendication 1, **caractérisée en ce qu'**au moins une fente est formée sur la couche adhésive et sur le séparateur.

12. Film multicouche selon la revendication 2, **caractérisé en ce qu'**au moins une fente est formée sur la couche adhésive et sur au moins un séparateur parmi le premier et le second séparateur.

13. Film multicouche selon la revendication 1, **caractérisé en ce qu'**au moins une fente est formée sur la feuille de base matérielle, sur la couche adhésive, et sur le séparateur.

14. Film multicouche selon la revendication 2, **caractérisé en ce qu'**au moins une fente est formée sur la feuille de base matérielle, sur la couche adhésive, et sur un séparateur au moins parmi le premier et le second séparateur.

15. Film multicouche selon la revendication 5, **caractérisé en ce qu'**une ligne de détachement est formée à une frontière entre ladite aire effective et ladite aire à jeter.

16. Film multicouche selon la revendication 6, **caractérisé en ce qu'**une ligne de détachement est formée à une frontière entre ladite aire effective et ladite aire à jeter.

17. Film multicouche selon la revendication 1, **caractérisé en ce que** le séparateur est plus grand que la feuille de base matérielle.

18. Film multicouche selon la revendication 2, **caractérisé en ce que** le séparateur est plus grand que la feuille de base matérielle.

19. Film multicouche selon la revendication 17, **caractérisé en ce qu'**au moins une portion d'une fente est formée sur une portion du séparateur sans superposer la feuille de base matérielle.

20. Film multicouche selon la revendication 18, **caractérisé en ce qu'**au moins une portion d'une fente est formée sur une portion de l'un au moins des séparateurs sans superposer la feuille de base matérielle.
